(19) Europäisches Patentamt
European Patent Office
Office européen des brevets

(11) EP 0 693 815 B1

(12) **EUROPEAN PATENT SPECIFICATION**

(45) Date of publication and mention
of the grant of the patent:
**03.03.1999 Bulletin 1999/09**

(51) Int Cl.⁶: **H02J 7/10**

(21) Application number: **95304379.1**

(22) Date of filing: **22.06.1995**

(54) **Auxiliary battery charge control circuits**

Ladesteuerungsschaltung für eine Zweitbatterie

Circuit de commande de la charge de batterie auxiliaire

(84) Designated Contracting States:
**AT BE DE DK ES FR GB GR IE IT LU NL PT SE**

(30) Priority: **22.07.1994 US 279294**

(43) Date of publication of application:
**24.01.1996 Bulletin 1996/04**

(73) Proprietor: **ADVANCED MICRO DEVICES INC.**
**Sunnyvale, California 94088-3453 (US)**

(72) Inventor: **Duley, Raymond S.**
**Buda, Texas 78610 (US)**

(74) Representative: **BROOKES & MARTIN**
**High Holborn House**
**52/54 High Holborn**
**London, WC1V 6SE (GB)**

(56) References cited:
**EP-A- 0 187 369**      **WO-A-82/04345**

- **ELECTRONICS INTERNATIONAL, vol. 53, no. 2,**
**27 January 1981, NEW-YORK, pages 129-132,**
**XP002012803 SCHERPENBERG: "static n-mos**
**ram idles on trickle current"**

## Description

This invention relates to a portable electronic device which requires auxiliary battery backup and more particularly to a circuit for controlling charge (and discharge) of the auxiliary battery.

A portable electronic device can be powered from several sources. When available, electronic devices are powered from an AC power supply. Portable electronic devices, however, generally utilize power management architecture and can be powered from a self-contained source such as a battery. Portable electronic devices such as laptop computers, employ sophisticated power management for reducing power consumption during.times in which the portable device is not fully utilized. Thus, power management implies standby, suspend and off modes of operation depending upon how much of the portable device is being used. Power management is generally described in U.S. Patent No. 5,167,024 to Smith, et al. (incorporated herein by reference). Power management of a low power portable device has made prevalent use of a battery as the device's main power source when the AC power supply is unavailable. The battery can maintain delivery of power for several hours depending upon the device's mode of operation. If fully operational, the device will discharge the battery faster than it would if in suspend, standby or off states.

The battery not only serves as the main power source when AC power is unavailable, but also must maintain the memory states of any dynamic RAM memory within the portable device. If, for example, the portable device employs dynamic RAM (DRAM), then the DRAM must be periodically refreshed. If not refreshed, the stored states within DRAM will be lost. It is therefore crucial that the battery maintain enough power to periodically refresh DRAM.

A portable device is oftentimes operated for several hours from a battery source. During operation, the battery source can discharge to significantly low levels. After prolonged operation, the battery may discharge well below a minimum level necessary to maintain DRAM refresh rate. It is therefore important that a minimum charge be maintained to ensure retainage of DRAM state.

Many modern portable electronic devices use an auxiliary battery in addition to a main battery. The main battery provides a main source of power for operating the portable device when AC power is unavailable. The main battery is therefore much larger than and provides greater amounts of power than the auxiliary battery. The auxiliary battery is therefore primarily used for maintaining DRAM state and not for powering the portable device. Unfortunately, however, when the main battery becomes unduly discharged, is disconnected or fails, the auxiliary battery will attempt to power the portable device. The auxiliary battery, however, will not be able to maintain operation power for long periods of time and, if called upon to do so, the auxiliary battery will discharge below a minimum level necessary to refresh DRAM.

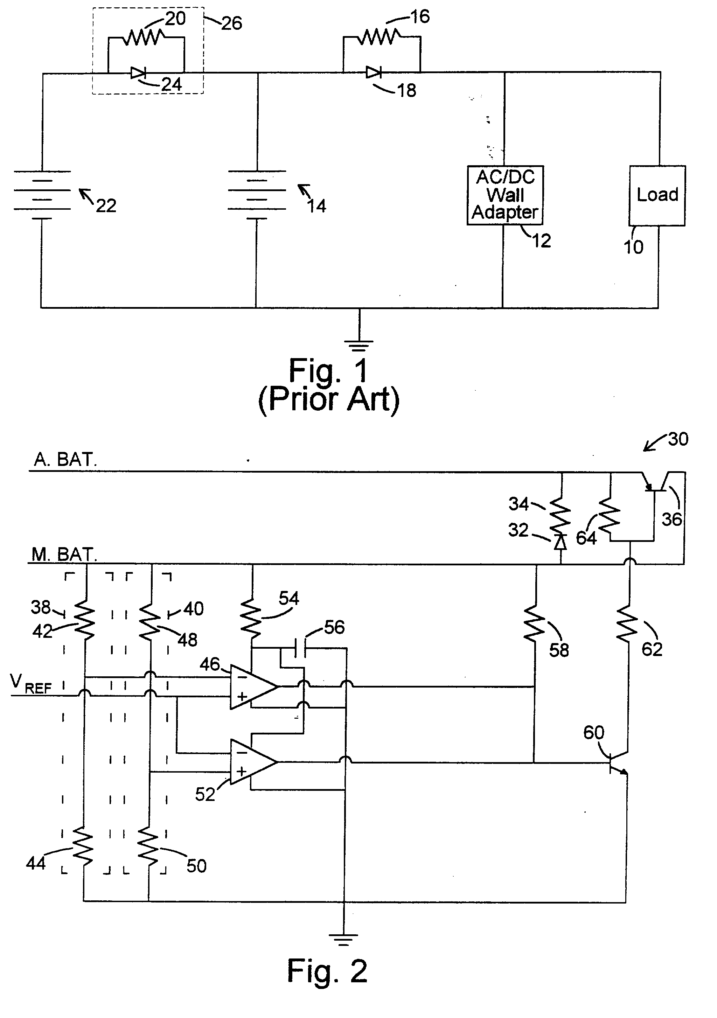

Fig. 1 illustrates an exemplary configuration for powering a DRAM-based portable electronic device 10. Electronic device 10 receives power from an AC power source 12, when available. When absent an AC power source 12, electronic device 10 receives power from a main battery 14. Main battery 14 receives trickle charge from an available AC power supply 12 through resistor 16 placed in parallel with diode 18. When AC power supply 12 is removed, main battery 14 provides operational power through diode 18 to device 10. Main battery 14 (or AC power source 12) provide trickle charge through resistor 20 to auxiliary battery 22.

As described above, auxiliary battery 22 tries to charge main battery 14 when main battery 14 is overdischarged, or when auxiliary battery 22 charge is greater than main battery 14 charge. As defined herein, "overdischarge" refers to a discharge less than 0.8 volts per cell when employing NiMH or NiCAD battery cells. Auxiliary battery 22 will become overdischarged if it tries to charge an overly discharged main battery 14 through diode 24. Overdischarge of main battery 14 can be caused by several reasons, including one or more defective cells within main battery 14, or by failure in detecting an overdischarged condition of main battery 14.

Prior art auxiliary battery charge control circuit 26 (shown encompassed in dashed lines) suffers numerous disadvantages, some of which are described above. While circuit 26 provides trickle charge to auxiliary battery 22 during times in which AC power source 12 is present, or when main battery is adequately charged, it does not provide for cessation of discharge of auxiliary battery when AC source is absent and/or when main battery is overdischarged. Thus, circuit 26 is not designed to prevent overdischarge of auxiliary battery 22 below safe levels necessary to maintain DRAM status.

The problems outlined above are in large part solved by the improved auxiliary battery charge control circuit to be described herein. The charge circuit is purposefully designed to cease discharge of the auxiliary battery at a state above a minimum value necessary to maintain DRAM status. Specifically, the improved control circuit disconnects the auxiliary battery from the main battery whenever the main battery demands discharge of the auxiliary battery below a safe voltage level. During times in which the main battery is adequately charged, the auxiliary battery maintains its connection thereto in order to allow trickle charge from the main battery to the auxiliary battery.

The control circuit comprises an auxiliary battery, a main battery and an AC-to-DC converter connected in parallel with each other and in parallel to a load device. As defined herein, "load device" is a portable electronic device which consumes current (and/or power) and requires an operating voltage during times of full operation, and a lesser operating voltage during standby or suspend states of operation. The suspend state can be powered by either the main battery or the auxiliary battery. The charge control circuit further includes a main battery charge control circuit connected between the main battery and the AC-to-DC adapter. The main battery charge control circuit provides a current from the AC-to-DC adapter to the main battery. The control circuit still further includes an auxiliary battery charge control circuit connected between the auxiliary battery and the main battery. The auxiliary battery charge control circuit provides current to and from the main battery, as well as to the load, and thereby modulates connectivity therebetween.

The auxiliary battery charge control circuit comprises a pair of voltage dividers coupled between a ground potential and the main battery. Also included is a pair of comparators. Each comparator has an output connected to the other comparator output and a pair of inputs connected to a reference voltage and a respective one of the pair of voltage dividers. The auxiliary battery charge control circuit also includes a switch transistor having a base and switch transistor conductive path. The base is connected to the mutually coupled comparator outputs and the switch transistor conductive path is modulated by the base and is connected between a current limiting resistor and the ground potential. A battery connect transistor is also included having a base and a battery connect conductive path. The base of the battery connect transistor is connected through the current limiting resistor to the switch transistor conductive path The battery conductive path is connected between the auxiliary battery and the main battery. Changes in conductivity of the switch transistor conductive path correspondingly cause changes in conductivity between the auxiliary battery and the main battery.

The pair of voltage dividers comprise a first voltage divider and a second voltage divider. The first voltage divider comprises a first pair of divider resistors connected together by first divider node and the second voltage divider comprises a second pair of divider resistors connected together by a second divider node. The first divider node is connected to the inverting input of one of the pair of comparators, and the second divider node is connected to the non-inverting input of the other of the pair of comparators. The first divider node is at a first divided voltage greater than a second divided voltage upon the second divider node. The connectivity between the auxiliary battery and the main battery is maximum during times in which the voltage levels upon the first divider node and the second divider node are less than and greater than, respectively, the reference voltage.

Accordingly, we shall describe a circuit for charging and discharging an auxiliary battery and for disconnecting the auxiliary battery from a main battery. The charging and discharging circuit comprises battery and a main battery connected to a load device. A series-connected diode and a resistor are connected between the auxiliary battery and the main battery for charging the auxiliary battery from the main battery during times in which the voltage upon the main battery exceeds by a threshold amount of voltage upon the auxiliary battery. The charging and discharging circuit further includes an auxiliary battery charge control circuit connected between the main battery terminal and the auxiliary battery terminal for discharging an inserted auxiliary battery during times in which a voltage upon the main battery terminal is within a range less than the voltage upon the auxiliary battery terminal, and disconnecting terminals between the auxiliary battery and the main battery during times in which a voltage upon the main battery terminal exceeds a threshold amount above the voltage upon the auxiliary battery terminal and is less than a threshold amount above a ground potential. The auxiliary battery charge control circuit comprises a first and a second voltage divider coupled in parallel between the ground potential and the main battery. The auxiliary battery charge control circuit further comprises a first and a second comparator having a mutually coupled output. The first comparator includes an inverting input adapted to receive a first divided voltage from the first voltage divider and the second comparator includes a non-inverting input adapted to receive a second divided voltage from the second voltage divider. The auxiliary battery charge control circuit still further includes a switch transistor having a base and a switch transistor conductive path. Changes in conductivity of the switch transistor conductive path correspondingly cause changes in connectivity between the auxiliary battery and the main battery.

Other objects and advantages of the invention will become apparent upon reading the following detailed description and upon reference to the accompanying drawings in which, by way of example only:

Fig. 1 is a circuit for controlling charge (or discharge) of an auxiliary battery using an auxiliary battery charge control circuit of prior art design; and Fig. 2 is a auxiliary battery charge control circuit according to the present invention.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the scope of the appended claims.

Turning now to Fig. 2, an improved auxiliary battery charge control circuit 30 is shown. Charge control circuit 30 can be substituted for prior design charge control circuit 26, shown in Fig. 1, to make up a circuit or system for controlling charge (or discharge) of an auxiliary battery. Circuit 30 allows main battery charge current to move from main battery terminal (M. BAT.) to the auxiliary battery terminal (A. BAT.) through diode 32 and series-connected resistor 34. In order to receive a charge through resistor 34 and diode 32, the voltage upon the main battery terminal must be at least a threshold (diode threshold) more positive than the voltage upon the A. BAT. In most instances, M. BAT. voltage is greater than A. BAT. voltage thereby forward biasing diode 32 and trickle charging A. BAT. from M. BAT. However, if the M. BAT. unduly discharges at a level less than a threshold above the auxiliary battery level, then diode 32 turns off, and any connectivity between main battery and auxiliary battery occurs through battery connect transistor 36. Modulation of transistor 36 is determined by the voltage level of M. BAT., as will be described below. As set forth hereinbelow, M. BAT., main battery, and main battery terminal are used interchangeably. Further, A. BAT., auxiliary battery, and auxiliary battery terminal are used interchangeably.

Coupled between the main battery and ground potential is a first voltage divider 38 and a second voltage divider 40. Connected at a first divider node between resistive elements 42 and 44 is an inverting input of a first comparator 46. Likewise, connected at a second divider node between resistive elements 48 and 50 of second voltage divider 40 is the non-inverting input terminal of second comparator 52. The non-inverting input of first comparator 46 is coupled to the inverting input of second comparator 52, all of which is connected to a reference voltage ($V_{REF}$). The reference voltage can derived from common techniques using, for example, bandgap voltage reference integrated circuits or a zener diode having the anode side connected to a ground terminal and the cathode side connected to a reference voltage ($V_{ref}$). A limiting resistor is used with the zener diode and is generally coupled between the cathode and $V_{ref}$. The cathode is therefore fixed at or near $V_{ref}$.

First and second comparators 46 and 52, respectively, are each coupled between main battery and ground potential. Main battery provides power through resistive element 54 to first comparator 46. A capacitor is linked between the upper power rail and lower power rail of first comparator 46 and second comparator 52 to provide a low pass filter of any transient noise upon the main battery terminal such that the noise is filtered from the power (and ground) terminals of comparators 46 and 52.

The outputs of first and second comparators 46 and 52 are coupled together on one side of a pull-up resistor 58 and the base of switch transistor 60. The conductive path of switch transistor 60 is coupled through resistor 62 to the base of battery connect transistor 36. Coupled between the base and emitter nodes of transistor 36 is pull-up resistor 64.

Operation of auxiliary battery charge control circuit 30 is best understood by first determining the voltage potential upon main battery which would cause battery connect transistor 36 to turn off. It is important that transistor 36 turn off whenever main battery voltage exceeds a maximum amount ($V_{MAX}$) or is less than a minimum amount ($V_{MIN}$). As used hereinbelow, the terms maximum amount and $V_{MAX}$ are interchangeable, and the terms minimum amount and $V_{MIN}$ are interchangeable. A main battery voltage which exceeds a maximum amount is indicative of a main battery which is providing power to the electronic device without need of auxiliary battery connection. A main battery voltage less than a minimum amount indicates a possible defective main battery or that the main battery is being replaced. At such times, the auxiliary battery is disconnected from the main battery to prevent over discharge of the auxiliary battery into the main battery or electronic device load.

The maximum and minimum voltage values for the main battery, above which or below which a disconnection occurs, is set as a proportionate amount the reference voltage ($V_{REF}$). Using voltage division network analysis and operable characteristics of comparators, voltage upon first divider node (at the inverting input of first comparator 46) necessary to drive the output of comparator 46 to ground is as follows:

$$(V_{M.\ BAT.} \times R_{44}) / (R_{42} + R_{44}) > V_{REF}$$

$R_{42}$ and $R_{44}$ indicate the resistive values for resistor 42 and resistor 44, as designated in Fig. 2. To provide a ground level output from comparator 52, the second divider node (at the non-inverting input of comparator 52) must be as follows:

$$(V_{M.\ BAT.} \times R_{50}) / (R_{50} + R_{48}) > V_{REF}$$

$R_{50}$ and $R_{48}$ designate resistors 50 and 48, as shown in Fig. 2.

Manipulation of the above formulas produce the following result:

$$V_{M.\ BAT.} > V_{REF} \times (R_{42} + R_{44}) / R_{44},$$

and

$$V_{M.\ BAT.} < V_{REF} (R_{48} + R_{50}) / R_{50}$$

In the above formulas, $V_{REF} (R_{42} + R_{44}) / R_{44}$ is equal to an upper voltage level ($V_{MAX}$). The term $V_{REF} (R_{48} + R_{50}) / R_{50}$ is equal to a minimum voltage level ($V_{MIN}$). Thus, if main battery voltage exceeds an upper voltage limit, then switch transistor will turn off. Likewise, if main battery voltage is less than a lower voltage limit, then switch transistor 60 will turn off. In either instance (main battery exceeding an upper voltage limit or less than a lower voltage limit) switch transistor 60 will cause a disconnect.

Using as an example a reference voltage ($V_{REF}$) of 2.5 volts, upper voltage limit can be adjusted at any value, an exemplary value being 7 volts, and lower voltage limit exemplary value being 5 volts. The voltage values for upper and lower voltage limits can be set according to the ratio of chosen resistor values 42, 44, 48 and 50. Thus, resistor values can vary to define an upper and lower voltage limit relative to the reference voltage. The upper voltage limit is preferably chosen as being one volt less than the over discharged state of the main battery. If the main battery utilizes ten cells, and each cell has an overdischarged state of 0.8 volts, then the main battery achieves overdischarge at 8 volts, whereby the upper voltage limit is preferably set at 7 volts (i.e., one volt less than the overdischarge value). The lower voltage limit ($V_{MIN}$) is generally set at the minimum value at which the auxiliary battery can maintain DRAM logic state. Thus, if DRAM loses logic state less than 5 volts, then the lower voltage limit is set at 5 volts. The lower voltage limit is therefore set at the minimum value at which the portable product can maintain voltage regulation. It is appreciated from the illustration of Fig. 2 that upper and lower voltage limits can be easily set by changing resistor values in the first and second voltage dividers 38 and 40. If voltage on main battery is between the upper and lower voltage limits, then an open circuit (or high impedance) occurs at the output of each comparator 46 and 52. The high impedance status is pulled to upper levels by resistor 58 causing switch transistor 60 to turn on as well as battery connect transistor 36. Accordingly, main battery voltage between the upper and lower level limits causes connectivity of main battery to auxiliary battery. When transistor 60 and 36 are on, resistor 62 limits base current in transistor 36 and resistor 64 pulls up transistor 36 base to ensure that transistor 36 is off when transistor 60 is off.

The present advantage of auxiliary battery charge control circuit 30 is that it is capable of supplying power to a portable electronic device when the main battery voltage is between an upper and lower voltage limit ($V_{MAX}$ and $V_{MIN}$). The auxiliary battery does not power either the main battery or the portable electronic device when the main battery is in an overdischarge state (i.e., below $V_{MIN}$). Furthermore, when the auxiliary battery is supplying power to the system, there is no series diode drop of voltage between the auxiliary battery and the main battery terminals as in exemplary prior battery charge control circuits. As such, the auxiliary battery charge control circuit hereof avoids waste of power and decreases its output voltage. When auxiliary main battery terminals are connected, the only voltage drop is through a fully saturated transistor (i.e., battery connect transistor 36). Voltage drop across the saturated transistor is generally less than 0.1 volts and is, in almost all instances, less than the forward bias voltage drop across a diode (e.g., 0.6 volts) within conventional charge control circuits.

It will be appreciated to those skilled in the art having the benefit of this disclosure that this invention is believed to be capable of applications with any portable electronic device. Furthermore, it is also to be understood that the form of the invention shown and described is to be taken as presently preferred embodiment. Various modifications and changes may be made to each and every electrical component as would be necessary to achieve suitable upper and lower voltage limits. Such changes would be obvious to a person skilled in the art having the benefit of this disclosure and would not depart from the spirit and scope of the invention as set forth in the claims. It is intended that the following claims be interpreted to embrace all such modifications and changes and, according, the specification and drawings are to be regarded in an illustrative rather than a restrictive sense.

## Claims

1. An auxiliary battery charge control circuit (30) for charging and discharging an auxiliary battery (A. BAT) ; the auxiliary battery, a main battery (M.BAT) and an AC/DC converter being connected in parallel to a load device, and a main battery charge control circuit being connected between the AC/DC converter and the main battery,

   *characterised in that* the auxiliary battery charge control circuit (30) is adapted for disconnecting the auxiliary battery from the main battery during times in which a voltage upon the main battery exceeds a threshold amount above the voltage upon the auxiliary battery ($V_{M-BAT} > V_{MAX}$) or is less than a threshold amount above a ground potential ($V_{M.BAT} < V_{M.MIN}$); said auxiliary battery charge control circuit comprising:

   a first and a second voltage divider (38,40) coupled in parallel between ground potential and the main battery, the first voltage divider (38) having a first divider node defining an upper voltage limit and the second voltage divider (40) having a second divider node defining a lower voltage limit relative to a reference voltage ($V_{REF}$);

   a first and a second comparator (46, 52) having a mutually coupled output, the first comparator (46) having an inverting input adapted to receive a first divided voltage from said first divider node and the second comparator (52) having a non-inverting input adapted to receive a second divided voltage from said second divider node, wherein the first divided voltage is greater than the second divided voltage;

   a switch transistor (60) having a base and a switch transistor conductive path, said base being connected to said mutually coupled comparator output and said switch transistor conductive path being controlled by said base and being connected between a current limiting resistor (62) and said ground potential; and
a battery connect transistor (36) having a base and a battery connect conductive path, said base being connected through said current limiting resistor (62) to said switch transistor (60) conductive path, and wherein said battery connect conductive path is connected between the auxiliary battery and the main battery, whereby control of said switch transistor conductive path correspondingly controls connection of the auxiliary battery to the main battery for discharging the auxiliary battery and disconnection of the auxiliary battery from the main battery.

2. The control circuit as recited in claim 1, wherein the auxiliary battery and the main battery are connected during times in which the voltage levels upon said first divider node and said second divider node are less than and greater than, respectively, said reference voltage.

3. A control circuit according to claim 1 or claim 2, wherein at least one of said pair of comparators comprises a power node coupled through a low pass filter (56) to the main battery.

4. A control circuit according to any preceding claim, wherein the switch transistor (60) comprises an npn bipolar transistor having the emitter connected to ground potential.

5. A control circuit according to any preceding claim, wherein the battery connect transistor (36) comprises a pnp bipolar transistor having the emitter connected to the auxiliary battery and the collector connected to the main battery.

6. A control circuit according to any preceding claim, wherein a diode (32) and trickle charge resistor (34) are connected in series between the main battery and the auxiliary battery for charging the auxiliary battery from the main battery.

7. A control circuit according to any one of the preceding claims wherein the ac-to-dc converter is adapted for delivering a first voltage level, the main battery is adapted for delivering a second voltage level, and the auxiliary battery is adapted for delivering a third voltage level, wherein the first voltage level is greater than the second voltage level, and the second voltage level is greater than the third voltage level.

8. A control circuit according to any one of the preceding claims wherein the auxiliary battery comprises five batteries connected in series, each battery being 1.2 volts nominal.

9. A control circuit according to any one of the prceding claims wherein the main battery comprises ten batteries connected in series, each battery being 1.2 volts nominal.

**Patentansprüche**

1. Hilfsbatterie-Ladesteuerschaltung (30) zum Laden und Entladen einer Hilfsbatterie (A.BAT) ; wobei die Hilfsbatterie, eine Hauptbatterie (M.BAT) und ein AC/DC-Konverter parallel zu einer Ladevorrichtung geschaltet sind, und eine Hauptbatterie-Ladesteuerschaltung zwischen den AC/DC-Konverter und die Hauptbatterie geschaltet ist,
dadurch gekennzeichnet, daß die Hilfsbatterie-Ladesteuerschaltung (30) in der Lage ist, die Hilfsbatterie von der Hauptbatterie zu den Zeiten zu trennen, zu denen eine Spannung an der Hauptbatterie einen Schwellbetrag übersteigt, der über der Spannung an der Hilfsbatterie liegt ($V_{M.BAT}>V_{M.MAX}$), oder kleiner ist als ein Schwellbetrag über einem Massepotential ($V_{M.BAT}<V_{M.MIN}$); wobei die Hilfsbatterie-Ladesteuerschaltung (30) aufweist:

einen ersten und einen zweiten Spannungsteiler (38,40), die parallel zwischen das Massepotential und die Hauptbatterie geschaltet sind, wobei der erste Spannungsteiler (38) einen ersten Teiler-Schaltungspunkt aufweist, der einen oberen Spannungs-Grenzwert definiert, und der zweite Spannungsteiler (40) einen zweiten Teiler-Schaltungspunkt aufweist, der einen unteren Spannungs-Grenzwert relativ zu einer Referenzspannung ($V_{REF}$) definiert;
einen ersten und einen zweiten Komparator (46,52) mit gekoppelten Ausgängen, wobei der erste Komparator (46) einen invertierenden Eingang aufweist, der in der Lage ist, eine erste geteilte Spannung von dem ersten Teiler-Schaltungspunkt zu empfangen, und der zweite Komparator (52) einen nichtinvertierenden Eingang aufweist, der in der Lage ist, eine zweite geteilte Spannung von dem zweiten Teiler-Schaltungspunkt zu empfangen, wobei die erste geteilte Spannung größer ist als die zweite geteilte Spannung;
einen Schalttransistor (60) mit einer Basis und einem leitenden Pfad, wobei die Basis mit den gekoppelten Komparator-Ausgängen verbunden ist und der leitende Pfad des Schalttransistors durch die Basis gesteuert ist und zwischen einen Strombegrenzungswiderstand (62) und das Massepotential geschaltet ist; und einen Batterieanschlußtransistor (36) mit einer Basis und einem leitenden Pfad, wobei die Basis durch den Strombegrenzungswiderstand (62) mit dem leitenden Pfad des Schalttransistors (60) verbunden ist, und wobei der leitende Pfad des Batterieanschlusses zwischen die Hilfsbatterie und die Hauptbatterie geschaltet ist, wodurch durch die Steuerung des leitenden Pfads des Schalttransistors in entsprechender Weise die Verbindung der Hilfsbatterie mit der Hauptbatterie gesteuert wird, um die Hilfsbatterie zu entladen und die Hilfsbatterie von der Hauptbatterie zu trennen.

2. Steuerschaltung nach Anspruch 1, bei der die Hilfsbatterie und die Hauptbatterie zu Zeiten miteinander verbunden sind, zu denen die Spannungspegel an dem ersten Teiler-Schaltungspunkt und dem zweiten Teiler-Schaltungspunkt kleiner bzw. größer als die Referenzspannung sind.

3. Steuerschaltung nach Anspruch 1 oder Anspruch 2, bei der mindestens einer des Paares von Komparatoren einen Energie-Schaltungspunkt aufweist, der durch ein Tiefpaßfilter (56) mit der Hauptbatterie verbunden ist.

4. Steuerschaltung nach einem der vorhergehenden Ansprüche, bei der der Schalttransistor (60) einen n-p-n-Bipolar-Transistor aufweist, dessen Emitter mit dem Massepotential verbunden ist.

5. Steuerschaltung nach einem der vorhergehenden Ansprüche, bei der der Batterieanschlußtransistor (36) einen p-n-p-Bipolar-Transistor aufweist, dessen Emitter mit der Hilfsbatterie verbunden ist und dessen Kollektor mit der Hauptbatterie verbunden ist.

6. Steuerschaltung nach einem der vorhergehenden Ansprüche, bei der eine Diode (32) und ein Trickle-Ladewiderstand (34) in Reihe zwischen die Hauptbatterie und die Hilfsbatterie geschaltet sind, um die Hilfsbatterie von der Hauptbatterie zu laden.

7. Steuerschaltung nach einem der vorhergehenden Ansprüche, bei der der AC/DC-Konverter in der Lage ist, einen ersten Spannungspegel auszugeben, die Hauptbatterie in der Lage ist, einen zweiten Spannungspegel auszugeben, und die Hilfsbatterie in der Lage ist, einen dritten Spannungspegel auszugeben, wobei der erste Spannungspegel größer als der zweite Spannungspegel ist und der zweite Spannungspegel größer als der dritte Spannungspegel ist.

8. Steuerschaltung nach einem der vorhergehenden Ansprüche, bei der die Hilfsbatterie fünf in Reihe geschaltete Batterien aufweist, von denen jede eine Nennspannung von 1,2 Volt hat.

9. Steuerschaltung nach einem der vorhergehenden Ansprüche, bei der die Hauptbatterie zehn in Reihe geschaltete Batterien aufweist, von denen jede eine Nennspannung von 1,2 Volt hat.

**Revendications**

1. Circuit de commande de la charge de batterie auxiliaire (30) pour charger et décharger une batterie auxiliaire (A.BAT) ; la batterie auxiliaire, une batterie principale (M.BAT) et un convertisseur CA/CC (Courant Alternatif/Courant Continu) étant connectés en parallèle à un dispositif de charge , et un circuit de commande de la charge d'une batterie principale étant connecté entre le convertisseur CA/CC et la batterie principale,

caractérisé en ce que le circuit de commande de la charge de batterie auxiliaire (30) est adapté pour déconnecter la batterie auxiliaire de la batterie principale pendant les moments durant lesquels une tension sur la batterie principale dépasse une valeur de seuil supérieure à la tension présente sur la batterie auxiliaire ($V_{M.BAT} > V_{MAX}$) ou est inférieure à une valeur de seuil supérieure à un potentiel de terre ($V_{M-BAT} < V_{M.MIN}$) ; ledit circuit de commande de la charge de batterie auxiliaire comprenant :

un premier et un second diviseur de tension (38, 40) couplé en parallèle entre un potentiel de terre et la batterie principale, le premier diviseur de tension (38) ayant un premier noeud de diviseur définissant une limite supérieure de tension et le second diviseur de tension (40) ayant un second noeud de diviseur définissant une limite de tension inférieure par rapport à une tension de référence ($V_{REF}$) ;
un premier et un second comparateurs (46, 52) comportant une sortie mutuellement couplée, le premier comparateur (46) ayant une entrée inverseuse adaptée pour recevoir une première tension divisée venant dudit premier noeud de diviseur et le second comparateur (52) ayant une entrée non inverseuse adaptée pour recevoir une seconde tension divisée venant dudit second noeud de diviseur, dans lequel ladite première tension divisée est plus grande que la seconde tension divisée ;
un transistor de commutation (60) comportant une base et un chemin conducteur du transistor de commutation, ladite base étant connectée à ladite sortie des comparateurs mutuellement couplés et ledit chemin conducteur de transistor de commutation étant commandé par ladite base et étant connecté entre une résistance de limitation de courant (62) et ledit potentiel de terre ; et

un transistor de connexion de batterie (36) comportant une base et un chemin conducteur de connexion de batterie, ladite base étant connectée à travers ladite résistance de limitation de courant (62) audit chemin conducteur du transistor de commutation (60), et dans lequel ledit chemin conducteur de connexion de batterie est connecté entre la batterie auxiliaire et la batterie principale, de façon que la commande dudit chemin conducteur du transistor de commutation commande, également, la connexion de la batterie auxiliaire à la batterie principale pour décharger la batterie auxiliaire et la déconnexion de la batterie auxiliaire de la batterie principale.

2. Circuit de commande selon la revendication 1, dans lequel la batterie auxiliaire et la batterie principale sont connectées pendant des moments au cours desquels les niveaux de tension sur ledit premier noeud de diviseur et ledit second noeud de diviseur sont, respectivement, inférieur et supérieur à ladite tension de référence.

3. Circuit de commande selon la revendication 1 ou 2, dans lequel l'un au moins de ladite paire de comparateurs comprend un noeud de tension couplé à travers un filtre passe-bas (56) à la batterie principale.

4. Circuit de commande selon l'une quelconque des revendications précédentes, dans lequel le transistor de commutation (60) comprend un transistor bipolaire npn présentant l'émetteur connecté au potentiel de terre.

5. Circuit de commande selon l'une quelconque des revendications précédentes, dans lequel le transistor de connexion de batterie (36) comprend un transistor bipolaire pnp présentant l'émetteur connecté à la batterie auxiliaire et le collecteur connecté à la batterie principale.

6. Circuit de commande selon l'une quelconque des revendications précédentes, dans lequel une diode (32) et une résistance de charge de compensation (34) sont connectées en série entre la batterie principale et la batterie auxiliaire pour charger la batterie auxiliaire à partir de la batterie principale.

7. Circuit de commande selon l'une quelconque des revendications précédentes dans lequel le convertisseur CA/CC est adapté pour délivrer un premier niveau de tension, la batterie principale est adaptée pour délivrer un second niveau de tension, et la batterie auxiliaire est adaptée pour délivrer un troisième niveau de tension, dans lequel le premier niveau de tension est plus grand que le second niveau de tension et le second niveau de tension est plus grand que le troisième niveau de tension.

8. Circuit de commande selon l'une quelconque des revendications précédentes dans lequel la batterie auxiliaire comprend cinq batteries connectées en série, chaque batterie ayant une tension nominale de 1,2 volt

9. Circuit de commande selon l'une quelconque des revendications précédentes dans lequel la batterie principale comprend dix batteries connectées en série, chaque batterie ayant une tension nominale de 1,2 volt.

Fig. 1
(Prior Art)

Fig. 2